# EUROPÄISCHE PATENTSCHRIFT

(11) **EP 1 275 542 B1**
(45) Veröffentlichungstag und Bekanntmachung des Hinweises auf die Patenterteilung: **18.10.2006**
(21) Anmeldenummer: 02013863.2
(22) Anmeldetag: 22.06.2002
(51) Int. Cl.: B60J 7/20

(54) **Abdeckvorrichtung für einen Verdeckkasten**
Covering device for soft top storage compartment
Dispositif de couverture pour compartiment de stockage de capote

(30) Priorität: 14.07.2001 DE 10134373
(43) Veröffentlichungstag der Anmeldung: 15.01.2003
(73) Patentinhaber: DaimlerChrysler AG, 70567 Stuttgart (DE)
(72) Erfinder: Koch, Michael, 71065 Sindelfingen (DE)

(56) Entgegenhaltungen:
- EP-A- 0 882 615
- DE-A- 19 714 105
- FR-A- 2 802 477

## Beschreibung

Die Erfindung betrifft eine Abdeckvorrichtung für einen Verdeckkasten eines Fahrzeugs mit versenkbarer Dachkonstruktion, insbesondere für ein Hardtop-Fahrzeug, mit den Merkmalen des Oberbegriffs des Anspruchs 1.

Aus der DE 197 14 105 ist eine derartige Abdeckvorrichtung bekannt.

Aus der DE 44 46 483 C2 ist eine Abdeckvorrichtung für ein Hardtop-Fahrzeug bekannt, bei der die Dachkonstruktion ein vorderes Dachteil und ein mit diesem verbundenes Rückfensterteil aufweist. Die Dachkonstruktion ist mittels einer karosserieseitig abgestützten Zwangssteuerungseinrichtung in den hinter einem Fondbereich in einem Heckbereich der Fahrzeugkarosserie angeordneten Verdeckkasten einschwenkbar. Dieser Verdeckkasten ist mit einem nach hinten hochklappbaren Verdeckkastendeckel verschließbar. Dabei bildet sich zwischen einem vorderen Randbereich des geschlossenen Verdeckkastendeckels und einem hinteren Randbereich des Fondbereichs ein Freiraum aus, der mittels einer Abdeckeinheit verschließbar ist. Diese Abdeckeinheit weißt ein vorderes Abdeckteil, ein mittleres Abdeckteil und hinteres Abdeckteil sowie zwei seitliche Abdeckteile auf, wobei die Abdeckteile in einer Schließstellung der Abdeckeinheit bei versenkter Dachkonstruktion eine im wesentlichen ebene und quasi lückenlose Abdeckung des Freiraums bilden, die sich etwa bündig an den Fondbereich und an den Verdeckkastendeckel anschließt.

Bei der bekannten Abdeckvorrichtung ist eine Falteinrichtung vorgesehen, mit der das hintere Abdeckteil und das mittlere Abdeckteil in eine aufgestellte Faltstellung verfahrbar sind, in der ihre Unterseiten aneinander anliegen. An dieser Falteinrichtung sind auch die seitlichen Abdeckteile gelagert, derart, dass sich auch die seitlichen Abdeckteile in der Faltstellung vertikal aufrichten. In dieser Faltstellung schließen das mittlere Abdeckteil und das hintere Abdeckteil an einen hinteren Randbereich des vorderen Abdeckteils an. Die Faltbarkeit der Abdeckteile ist erforderlich, um für das Verschwenken der Dachkonstruktion den dazu erforderlichen Verstellweg freizugeben. Sämtliche Abdeckteile können außerdem zusammen nach Art einen Schlittens in Fahrzeugslängsrichtung verstellt werden. Die Verstellbarkeit in Fahrzeuglängsrichtung wird benötigt, um bei versenkter Dachkonstruktion einen Spalt verdecken zu können, der sich erst beim Versenken der Dachkonstruktion unmittelbar vor dem vorderen Randbereich des Verdeckkastendeckels ausbildet und bei geschlossener Dachkonstruktion vom unteren Randbereich des Rückfensterteils verschlossen ist. Die seitlichen Abdeckteile werden benötigt, um bei geschlossener Dachkonstruktion einen Durchgang für die C-Säulen der Dachkonstruktion auszubilden. Bei geschlossener Dachkonstruktion sind die seitlichen Abdeckteile auf die Oberseite des mittleren Abdeckteils geklappt. Diese Anordnung der seitlichen Abdeckteile bei geschlossener Dachkonstruktion beansprucht Fahrzeuginnenraum und kann von jeweiligen Fahrzeuginsassen als störend empfunden werden. Insgesamt ist bei der bekannten Abdeckvorrichtung die Realisierung der Vielzahl an Verstellmöglichkeiten relativ aufwendig.

Die vorliegende Erfindung beschäftigt sich mit dem Problem, für eine Abdeckvorrichtung der eingangs genannten Art eine vorteilhafte Ausführungsform anzugeben, die einen relativ preiswerten Aufbau besitzt. Desweiteren soll die Abdeckvorrichtung einen relativ geringen Innenraumbedarf aufweisen.

Dieses Problem wird erfindungsgemäß durch eine Abdeckvorrichtung mit den Merkmalen des Anspruchs 1 gelöst.

Vorteilhafte Ausführungsformen sind in den Unteransprüchen dargelegt. Durch die erfindungsgemäß vorgeschlagene Lagerung der seitlichen Abdeckteile am Verdeckkastendeckel sind diese mechanisch unabhängig von den anderen Abdeckteilen verstellbar, wodurch sich Möglichkeiten zur Vereinfachung der für die Verstellung der seitlichen Abdeckteile vorgesehen Maßnahmen, z.B. für einen Stellantrieb, ergeben.

Bei einer bevorzugten Weiterbildung kann das hintere Abdeckteil bei geschlossener Dachkonstruktion auf die Unterseite des vorderen Abdeckteils geklappt sein. Bei der erfindungsgemäßen Abdeckvorrichtung wird das hintere Abdeckteil bei geschlossener Dachkonstruktion nicht benötigt, wobei es vorteilhaft aus dem Fahrzeuginnenraum nach unten weggeklappt ist, so dass die Ästhetik der geschlossenen Abdeckeinheit erhalten bleibt.

Zweckmäßig kann bei einer Weiterbildung das hintere Abdeckteil so geformt sein, dass es in der Schließstellung der Abdeckeinheit einen Spalt ausfüllt, der sich bei versenkter Dachkonstruktion zwischen dem hinteren Randbereich des vorderen Abdeckteils und dem vorderen Randbereich des geschlossenen Verdeckkastendeckels ausbildet. Bei dieser Ausgestaltung kann auf eine horizontale Verschiebbarkeit der Abdeckteile in Fahrzeuglängsrichtung verzichtet werden, wodurch sich die Konstruktion insgesamt erheblich vereinfacht.

Gemäß einer besonderen Ausführungsform kann das vordere Abdeckteil beim Verschwenken der Dachkonstruktion eine nach vorn hochgeklappte Schwenkhilfestellung einnehmen, in der das hintere Abdeckteil auf die Unterseite des vorderen Abdeckteils geklappt ist. Durch diese Bauweise kann der erforderliche Verstellweg für die Schwenkverstellung der Dachkonstruktion relativ einfach realisiert werden.

Entsprechend einer vorteilhaften Ausführungsform kann der Verdeckkasten unterhalb eines für die Unterbringung der Dachkonstruktion vorgesehenen Raumes als Kofferraum ausgebildet sein, wobei der Verdeckkastendeckel zum Öffnen es Kofferraums nach vorn hochklappbar ist, wobei das vordere Abdeckteil bei geöffnetem Kofferraum und bei versenkter Dachkonstruktion eine nach vorn hochgeklappte Beladehilftsstellung einnimmt, in der das hintere Abdeckteil auf die Unterseite des vorderen Abdeckteils geklappt ist. Bei versenkter Dachkonstruktion ist diese im Verdeckkasten oberhalb des Kofferraums angeordnet. Zur Verbesserung der Zugänglichkeit des Kofferraums kann beim Hochklappen des Verdeckkastendeckels nach vorn zum Öffnen des Kofferraums eine Beladehiftsfunktion aktiviert werden, die ein Hochklappen der versenkten Dachkonstruktion nach vorn bewirkt. Durch die erfindungsgemäße Beladehilfsstellung des vorderen Abdeckteils kann die gesamte Kinematik der Dachkonstruktion vereinfacht bzw. verbessert werden.

Bei einer anderen Ausführungsform können die seitlichen Abdeckteile bei geschlossener Dachkonstruktion auf die Unterseite des Verdeckkastendeckels geklappt sein. Bei dieser Bauweise sind die seitlichen Abdeckteile somit aus dem Fahrzeuginnenraum weggeklappt, wenn sie nicht benötigt werden. Hierdurch wird die Ästhetik der Abdeckeinheit bei geschlossener Dachkonstruktion verbessert.

Bei einer vorteilhaften Weiterbildung können Antriebsmittel zur Schwenkverstellung des vorderen Abdeckteils vorgesehen sein, die mechanisch mit einer karosserieseitig abgestützten Zwangsteuerungseinrichtung zum Verschwenken der Dachkonstruktion zwangsgekoppelt sind. Durch diese Bauweise ist die Schwenkverstellung der vorderen Abdeckklappe in die Zwangssteuerungseinrichtung der Dachkonstruktion integriert, wodurch eine sichere Funktionsweise gewährleistet werden kann.

In entsprechender Weise können bei einer anderen Weiterbildung Antriebsmittel zur Schwenkverstellung des hinteren Abdeckteils vorgesehen sein, die mechanisch mit der Zwangssteuerungseinrichtung der Dachkonstruktion zwangsgekoppelt sind. Auf diese Weise kann auch die Schwenkverstellung des hinteren Abdeckteils an die Kinematik der Dachkonstruktion zwangsläufig gekoppelt werden, so dass auch hier Fehlfunktionen ausgeschlossen werden können.

Desweiteren können bei einer Variante Antriebsmittel zur synchronen Schwenkverstellung der seitlichen Abdeckteile vorgesehen sein, die elektrisch oder elektronisch mit der Zwangssteuerungseinrichtung der Dachkonstruktion gekoppelt sind. Durch diese Kopplung, beispielsweise mittels elektrischer Sensoren oder Schalter, kann die Kinematik der seitlichen Abdeckteile von der Kinematik der Dachkonstruktion entkoppelt werden. Desweiteren ermöglicht diese Bauweise einen einfacheren Aufbau für die Antriebsmittel der seitlichen Abdeckklappen. Beispielsweise kann ein pneumatischer oder hydraulischer oder elektrischer Antrieb am Verdeckkastendeckel vorgesehen sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine perspektivische Ansicht auf einen Heckbereich eines mit einer erfindungsgemäßen Abdeckeinrichtung ausgestatteten Personenkraftwagens bei versenkter Dachkonstruktion,
- Fig. 2: eine perspektivische Ansicht auf eine Abdeckeinheit der erfindungsgemäßen Abdeckvorrichtung und auf einen Verdeckkastendeckel des im Übrigen nicht dargestellten Kraftfahrzeugs bei versenkter Dachkonstruktion,
- Fig. 3: eine Ansicht wie in Fig. 2, jedoch während einer Schwenkverstellung der teilweise gezeigten Dachkonstruktion,
- Fig. 4: eine Ansicht wie in Fig. 2, jedoch bei geschlossener Dachkonstruktion, die allerdings nur teilweise angedeutet ist, und
- Fig. 5: eine Ansicht wie in Fig. 2, jedoch bei geöffneter und teilweise gezeigter Dachkonstruktion in einer Beladehilfsstellung.

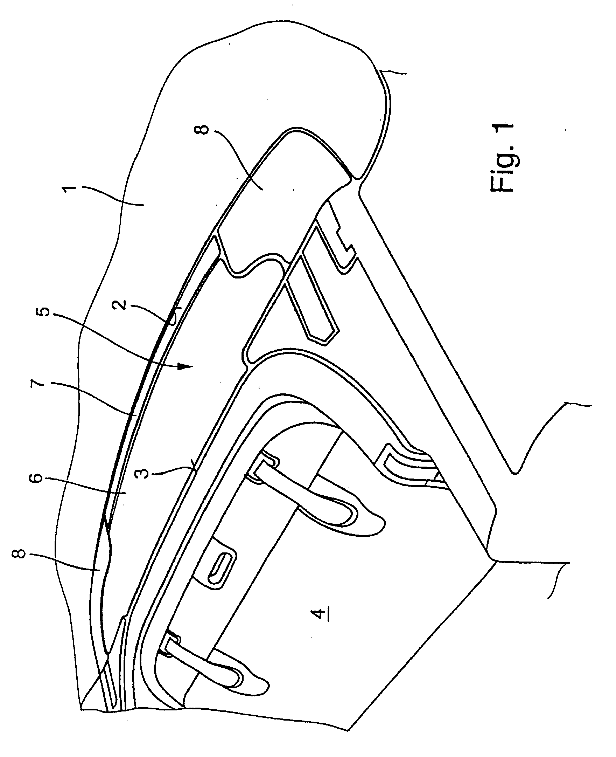

In Fig. 1 ist ein hinterer Abschnitt eines im Übrigen nicht dargestellten Personenkraftwagens dargestellt, der eine versenkbare Dachkonstruktion aufweist, so dass es sich bei dem Fahrzeug um ein sogenanntes Cabriolet handelt. Bei der Dachkonstruktion handelt es sich vorzugsweise um ein sogenanntes Hardtop, also um eine Dachkonstruktion mit Schalenelementen aus Metall oder Kunststoff. Ebenso ist eine Dachkonstruktion als Softtop möglich, bei der das versenkbare Dach im wesentlichen aus einem Stoffmaterial besteht. Im Heck des Fahrzeugs ist zur Unterbringung der versenkten Dachkonstruktion ein Verdeckkasten ausgebildet. Dieser Verdeckkasten ist mit einem Verdeckkastendeckel 1 verschließbar, der zum Öffnen des Verdeckkastens nach hinten hochklappbar an der Fahrzeugkarosserie gelagert ist. Sofern im Verdeckkasten neben bzw. unter dem Raum für die Unterbringung der Dachkonstruktion ein zusätzlicher Stauraum, sogenannter Kofferraum, enthalten ist, kann der Verdeckkastendeckel 1 zum Öffnen dieses Kofferraums außerdem nach vorn hochklappbar ausgestaltet sein.

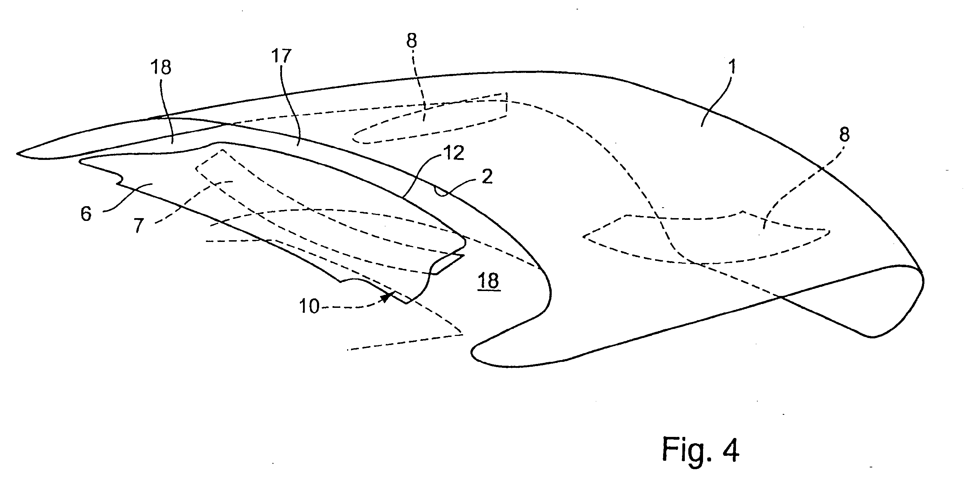

Bei verschlossenem Verdeckkastendeckel 1 verbleibt zwischen einem vorderen Randbereich 2 des Verdeckkastendeckels 1 und einem hinteren Randbereich 3 eines Fondbereichs 4 des Fahrzeugs ein Freiraum. Dieser Freiraum ist in Fig. 1 durch eine Abdeckeinheit 5 verschlossen. Die Abdeckeinheit 5 weist ein vorderes Abdeckteil 6, ein hinteres Abdeckteil 7 sowie zwei seitliche Abdeckteile 8 auf. Der Freiraum zwischen Verdeckkastendeckel 1 und Fondbereich 4 wird bei versenkter Dachkonstruktion von den vier Abdeckteilen 6, 7, 8 der Abdeckeinheit 5 im wesentlichen lückenlos geschlossen, wobei sich die Abdeckteile 6, 7, 8 etwa bündig an die Außenkontur des Verdeckkastendeckels 1 sowie des hinteren Randbereichs 3 des Fondbereichs 4 anschließen. Bei geschlossener Dachkonstruktion sind das hintere Abdeckteil 7 und die seitlichen Abdeckteile 8 weggeklappt, wobei ein vom weggeklappten hinteren Abdeckteil 7 freigegebener Spalt 17 (vgl. Fig. 4) von einem hinteren und unteren Randbereich der ausgefahrenen Dachkonstruktion durchsetzt ist, während die weggeklappten seitlichen Abdeckteile 8 jeweils eine Durchgangsöffnung 18 (vgl. Fig. 4) für eine C-Säule der geschlossenen Dachkonstruktion freigeben. Das vordere Abdeckteil 6 bildet in der Schließstellung bei verschlossener Dachkontruktion eine Hutablage im Innenraum des Fahrzeugs.

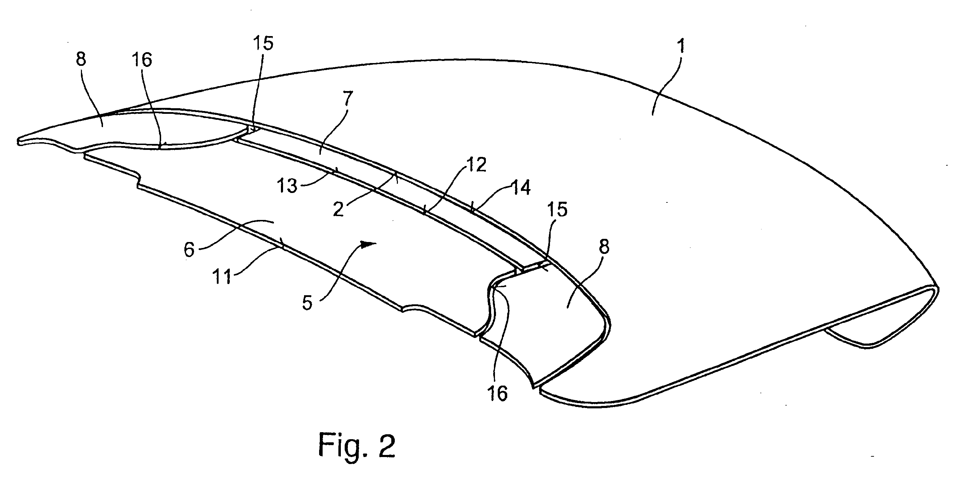

Das vordere Abdeckteil 6 ist an der Fahrzeugkarosserie schwenkbar gelagert, während das hintere Abdeckteil 7 am vorderen Abdeckteil 6 schwenkbar gelagert ist. Die seitlichen Abdeckteile 8 sind am Verdeckkastendeckel 1 schwenkbar gelagert. Durch die erfindungsgemäß vorgeschlagene Lagerung der einzelnen Abdeckteile 6, 7, 8 lässt sich eine spezielle Verstellkinematik erreichen, die im einzelnen in den folgenden Fig. 2 bis 5 näher erläutert wird, wobei in diesen Figuren nur noch die Abdeckteile 6, 7, 8 der Abdeckeinheit 5 und der Verdeckkastendeckel 1 sowie gegebenenfalls ein Bestandteil der Dachkonstruktion in verschiedenen Positionen dargestellt sind.

In Fig. 2 ist die Dachkonstruktion im Verdeckkasten verstaut und die Abdeckeinheit 5 befindet sich in ihrer Schließstellung, so dass sämtliche Abdeckteile 6, 7, 8 zum formintegrierten Verschließen des Freiraums dienen. Hierbei sind die seitlichen Abdeckteile 8 sowie das hintere Abdeckteil 7 ausgeklappt.

In dieser Stellung gemäß Fig. 2 grenzt das vordere Abdeckteil 6 mit einem vorderen Randbereich 11 an den hinteren Randbereich 3 des Fondbereichs 4 (vgl. Fig. 1). Mit einem hinteren Randbereich 12 grenzt das vordere Abdeckteil 6 an einen vorderen Randbereich 13 des hinteren Abdeckteils 7. Das hintere Abdeckteil 7 grenzt seinerseits mit einem hinteren Randbereich 14 an den vorderen Randbereich 2 des Verdeckkastendeckels 1. Die seitlichen Abdeckteile 8 grenzen sowohl an den vorderen Randbereich 2 des Verdeckkastendeckels 1 als auch an seitliche Randbereiche 15 und 16 des hinteren Abdeckteils 7 bzw. des vorderen Abdeckteils 6. Darüber hinaus grenzen die seitlichen Abdeckteile 8 an den hinteren Randbereich 3 des Fondbereichs 4 an, vgl. Fig. 1.

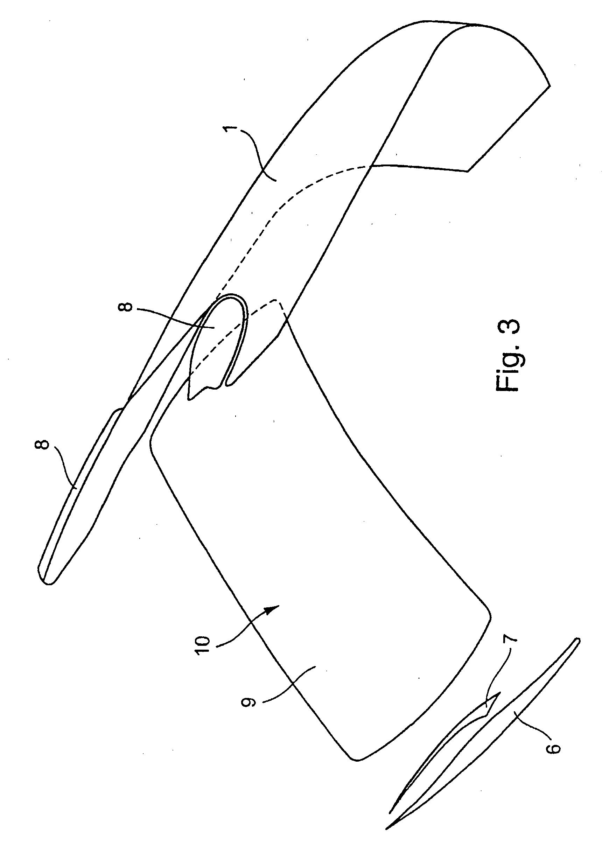

In Fig. 3 ist eine Dachschale 9 einer als Hardtop ausgebildeten und im Übrigen nicht dargestellten Dachkonstruktion 10 während eines Verstellvorgangs dargestellt. Zum Schließen der Dachkonstruktion wird zunächst der Verdeckkastendeckel 1 nach hinten hochgeklappt, wobei die daran angelenkten seitlichen Abdeckteile 8 ausgeklappt bleiben. Anschließend wird das vordere Abdeckteil 6 nach vorn hochgeklappt, wobei gleichzeitig das daran gelagerte hintere Abdeckteil 7 auf die Unterseite des vorderen Abdeckteils 6 weggeklappt wird. Auf diese Weise wird für die Dachkonstruktion 10 ein hinreichend großer Verstellweg freigegeben, der ein Verschwenken der Dachkonstruktion 10 aus dem Verdeckkasten über den Passagierraum des Fahrzeugs ermöglicht. In Fig. 3 nimmt das vordere Abdeckteil 6 seine Schwenkhilfsstellung ein. Bei geschlossener Dachkonstruktion 10 wird das vordere Abdeckteil 6 wieder nach hinten und unten zurückgeklappt, wobei allerdings das hintere Abdeckteil 7 an der Unterseite des vorderen Abdeckteils 6 in seinem weggeklappten Zustand verbleibt. Vor dem Zurückklappen des Verdeckkastendeckels 1 nach vorn und unten werden die seitlichen Abdeckteile 8 auf die Unterseite des Verdeckkastendeckels 1 weggeklappt.

In Fig. 4 ist der Zustand wiedergegebenen, der sich bei geschlossener Dachkonstruktion 10, geschlossenem Freiraum und geschlossenem Verdeckkasten ergibt. In diesem Zustand befinden sich das vordere Abdeckteil 6 und der Verdeckkastendeckel 1 in derselben Schließstellung, die sie auch in Fig. 2 bei versenkter Dachkonstruktion zum Verschließen von Freiraum und Verdeckkasten einnehmen. Im Unterschied zu Fig. 2 sind bei diesem Zustand jedoch das hintere Abdeckteil 7 auf die Unterseite des vorderen Abdeckteils 6 und die seitlichen Abdeckteile 8 auf die Unterseite des Verdeckkastendeckels 1 weggeklappt.

Bei weggeklapptem hinteren Abdeckteil 7 bildet sich zwischen dem hinteren Randbereich 12 des vorderen Abdeckteils 6 und dem vorderen Randbereich 2 des Verdeckkastendeckels 1 ein Spalt 17 aus, der von einem nicht dargestellten unteren und hinteren Randbereich der Dachkonstruktion durchsetzt ist. Die weggeklappten seitlichen Abdeckteile 8 hinterlassen zwischen vorderem Abdeckteil 6 und Verdeckkastendeckel 1 jeweils eine Durchgangsöffnung 18 für eine der C-Säulen der mit unterbrochenen Linien angedeuteten geschlossenen Dachkonstruktion 10. Die weggeklappten Abdeckteile 7 und 8 sind bei geschlossener Dachkonstruktion 10 somit nicht sichtbar, wodurch sich ein besonders formschön gestalteter Fahrzeuginnenraum ergibt. Dies ist insbesondere dadurch möglich, dass die Dimensionierung der seitlichen Abdeckklappen 8 sowie der hinteren Abdeckklappe 7 so gewählt ist, dass das vordere Abdeckteil 6 bei geschlossener Dachkonstruktion 10 mit seinem hinteren Randbereich 12 im wesentlichen nahtlos an den unteren, inneren Randbereich der Dachkonstruktion 10 anschließt.

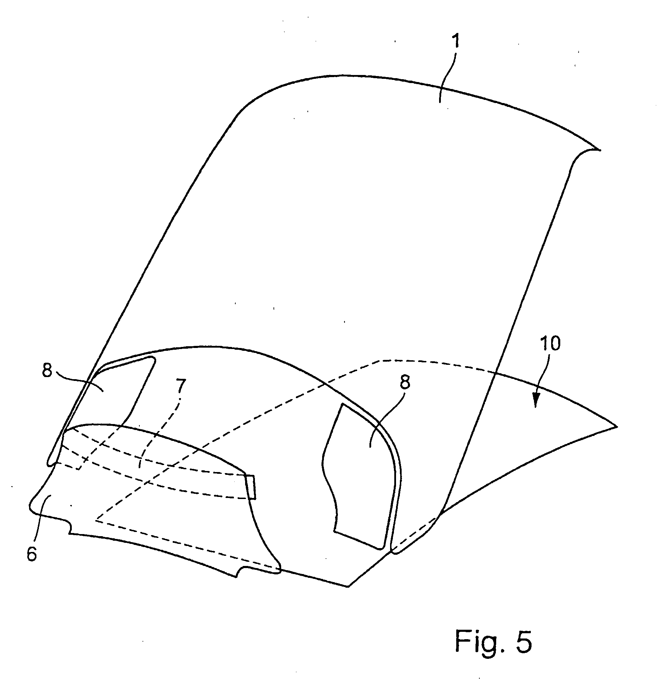

In Fig. 5 ist ein Zustand dargestellt, der sich dann ergibt, wenn der Verdeckkastendeckel 1 bei im Verdeckkasten untergebrachter Dachkonstruktion 10 zum Öffnen des Kofferraums nach vorn hochgeklappt wird. Gemäß Fig. 5 befindet sich somit der Verdeckkastendeckel 1 in seiner Öffnungsstellung zum Beund Entladen des Kofferraums, wobei die seitlichen Abdeckteile 8 in ihrem ausgeklappten Zustand verbleiben. Um die Zugänglichkeit zum Kofferraum, der im Verdeckkasten unterhalb eines die Dachkonstruktion 10 aufnehmenden Raumes angeordnet ist, zu verbessern, nimmt die im Verdeckkasten untergebrachte Dachkonstruktion 10 eine nach vorn hochgeklappte oder hochgeschwenkte Beladehilftsstellung ein. Gleichzeitig wird auch das vordere Abdeckteil 6 nach vorn in eine Beladehilfsstellung hochgeklappt, die in Fig. 5 dargestellt ist. In dieser Beladhilfsstellung ist das hintere Abdeckteil 7 wieder auf die Unterseite des vorderen Abdeckteils 6 weggeklappt. Zweckmäßigerweise entspricht die Beladehilfsstelung des vorderen Abdeckteils 6 seiner Schwenkhilfsstellung. Durch diese Bauweise können die Bewegungsabläufe der einzelnen Bestandteile vereinfacht und besser synchronisiert werden.

Die Dachkonstruktion 10 ist mittels einer nicht gezeigten Zwangssteuerungseinrichtung, die sich karosserieseitig abstützt, zwischen der den Fahrzeuginnenraum bedeckenden geschlossenen Stellung und der in den Verdeckkasten verschwenkten offenen Stellung verschwenkbar angetrieben. Für die automatische Schwenkverstellung des vorderen Abdeckteils 6 sind geeignete, nicht gezeigte Antriebsmittel vorgesehen, die mechanisch mit der Zwangssteuerungseinrichtung der Dachkonstruktion 10 zwangsgekoppelt sind. Desweiteren sind für Schwenkverstellung des hinteren Abdeckteils 7 geeignete, nicht gezeigte Antriebsmittel vorgesehen, die ebenfalls mit der Zwangssteuerungseinrichtung der Dachkonstruktion mechanisch zwangsgekoppelt sind. Durch diese Zwangskopplung dieser Antriebsmittel ergibt sich eine selbsttätig ablaufende Kinematik für das vordere Abdeckteil 6 und das hintere Abdeckteil 7, wobei diese Kinematik an den Bewegungsablauf der Dachkonstruktion angepasst ist.

Zur Schwenkverstellung der beiden seitlichen Abdeckteile 8 sind weitere, ebenfalls nicht gezeigte Antriebsmittel vorgesehen, die insbesondere eine synchrone Schwenkverstellung der seitlichen Abdeckteile 8 ermöglichen. Die letztgenannten Antriebsmittel sind zweckmäßig von der Zwangssteuerungeinrichtung der Dachkonstruktion mechanisch abgekoppelt. Die Synchronisation der Schwenkverstellung der seitlichen Abdeckteile 8 mit dem Bewegungsablauf der Dachkonstruktion erfolgt dabei über eine elektrische oder elektronisch Kopplung mit der Zwangssteuerungseinrichtung.

Das Verstauen der Dachkonstruktion 10 im Verdeckkasten erfolgt in umgekehrter Weise zu dem weiter oben beschriebenen Vorgang zum Schließen der Dachkonstruktion. Dementsprechend wird ausgehend vom Zustand gemäß Fig. 4 zunächst der Verdeckkastendeckel nach hinten hochgeklappt, anschließend werden die seitlichen Abdeckteile 8 nach vorn ausgeklappt. Mit dem Ausschwenken der Dachkonstruktion 10 wird das vordere Abdeckteil 6 in seine Schwenkhilfsstellung nach vorn hochgeklappt, in der das hintere Abdeckteil 7 noch an der Unterseite des vorderen Abdeckteils 6 anliegt. Dementsprechend liegt dann der Zustand gemäß Fig. 3 vor. Nach dem Verstauen der Dachkonstruktion im Verdeckkasten wird das vordere Abdeckteil 6 nach hinten und unten geklappt, wobei gleichzeitig das hintere Abdeckteil 7 nach außen hochgeklappt wird. Schließlich wird der Verdeckkastendeckel 1 mit ausgeklappten seitlichen Abdeckteilen 8 zum Verschließen des Verdeckkastens nach unten geklappt. Die einzelnen Abdeckteile 6, 7, 8 wirken dann zur Ausbildung der Abdeckeinheit 5 zusammen und verschließen den Freiraum zwischen Fondbereich 4 und Verdeckkastendeckel 1.

## Patentansprüche

1. Abdeckvorrichtung für einen Verdeckkasten eines Fahrzeugs mit versenkbarer Dachkonstruktion (10), insbesondere für ein Hardtop-Fahrzeug, wobei die Dachkonstruktion (10) in den hinter einem Fondbereich (4) in einem Heckbereich der Fahrzeugkarosserie angeordneten Verdeckkasten einschwenkbar ist, wobei der Verdeckkasten mit einem nach hinten hochklappbaren Verdeckkastendeckel (1) verschließbar ist, wobei zwischen einem vorderen Randbereich (2) des geschlossenen Verdeckkastendeckels (1) und einem hinteren Randbereich (3) des Fondbereichs (4) ein Freiraum verbleibt, der mit einer Abdeckeinheit (5) verschließbar ist, die ein vorderes Abdeckteil (6), das in der Schließstellung der Abdeckeinheit (5) an den hinteren Randbereich (3) des Fondbereichs (4) sowie an einen vorderen Randbereich (13) des hinteren Abdeckteils (7) angrenzt, ein hinteres Abdeckteil (7), das in Schließstellung der Abdeckeinheit (5) bei im Verdeckkasten versenkter Dachkonstruktion (10) an einen hinteren Randbereich (12) des vorderen Abdeckteils (6) sowie an den vorderen Randbereich (2) des Verdeckkastendeckels (1) angrenzt, sowie zwei seitliche Abdeckteile (8), die in der Schließstellung der Abdeckeinheit (5) bei im Verdeckkasten versenkter Dachkonstruktion (10) an seitliche Randbereiche (15, 16) von vorderem Abdeckteil (6) und hinterem Abdeckteil (7), an den hinteren Randbereich (3) des Fondbereichs (4) sowie an den vorderen Randbereich (2) des Verdeckkastendeckels (1) angrenzen, aufweist,
**dadurch gekennzeichnet,**
- **dass** das vordere Abdeckteil (6) an der Fahrzeugkarosserie schwenkbar gelagert ist,
- **dass** das hintere Abdeckteil (7) am vorderen Abdeckteil (6) schwenkbar gelagert ist,
- **dass** die seitlichen Abdeckteile (8) jeweils am Verdeckkastendeckel (1) schwenkbar gelagert sind.

2. Abdeckvorrichtung nach Anspruch 1,
**dadurch gekennzeichnet,**
**dass** das hintere Abdeckteil (7) bei geschlossener Dachkonstruktion (10) auf die Unterseite des vorderen Abdeckteils (6) geklappt ist.

3. Abdeckvorrichtung nach Anspruch 2,
**dadurch gekennzeichnet,**
**dass** das hintere Abdeckteil (7) so geformt ist, dass es in der Schließstellung der Abdeckeinheit (5) einen Spalt (17) ausfüllt, der sich bei versenkter Dachkonstruktion (10) zwischen hinterem Randbereich (12) des vorderen Abdeckteils (6) und vorderem Randbereich (2) des Verdeckkastendeckels (1) ausbildet.

4. Abdeckvorrichtung nach einem der Ansprüche 1 bis 3,
**dadurch gekennzeichnet,**
**dass** das vordere Abdeckteil (6) beim Verschwenken der Dachkonstruktion (10) eine nach vorn hochgeklappte Schwenkhilfsstellung einnimmt, in der das hintere Abdeckteil (7) auf die Unterseite des vorderen Abdeckteils (6) geklappt ist.

5. Abdeckvorrichtung nach einem der Ansprüche 1 bis 4,
**dadurch gekennzeichnet,**
**dass** der Verdeckkasten unterhalb eines für die Unterbringung der Dachkonstruktion (10) vorgesehenen Raums als Kofferraum ausgebildet ist, wobei der Verdeckkastendeckel (1) zum Öffnen des Kofferraums nach vorn hochklappbar ist, wobei das vordere Abdeckteil (6) bei geöffnetem Kofferraum eine nach vorn hochgeklappte Beladehilfsstellung einnimmt, in der das hintere Abdeckteil (7) auf die Unterseite des vorderen Abdeckteils (6) geklappt ist.

6. Abdeckvorrichtung nach einem der Ansprüche 1 bis-5,
**dadurch gekennzeichnet,**
**dass** die seitlichen Abdeckteile (8) bei geschlossener Dachkonstruktion (10) auf die Unterseite des Verdeckkastendeckels (1) geklappt sind.

7. Abdeckvorrichtung nach einem der Ansprüche 1 bis 6,
**dadurch gekennzeichnet,**
**dass** Antriebsmittel zur Schwenkverstellung des vorderen Abdeckteils (6) vorgesehen sind, die mechanisch mit einer karosserieseitig abgestützten Zwangssteuerungseinrichtung zum Verschwenken der Dachkonstruktion (10) zwangsgekoppelt sind.

8. Abdeckvorrichtung nach einem der Ansprüche 1 bis 7,
**dadurch gekennzeichnet,**
**dass** Antriebsmittel zur Schwenkverstellung des hinteren Abdeckteils (7) vorgesehen sind, die mechanisch mit einer karosserieseitig abgestützten Zwangssteuerungseinrichtung zum Verschwenken der Dachkonstruktion (10) zwangsgekoppelt sind.

9. Abdeckvorrichtung nach einem der Ansprüche 1 bis 8,
**dadurch gekennzeichnet,**
**dass** Antriebsmittel zur synchronen Schwenkverstellung der seitlichen Abdeckteile (8) vorgesehen sind, die elektrisch oder elektronisch mit einer karosserieseitig abgestützten Zwangssteuerungseinrichtung zum Verschwenken der Dachkonstruktion (10) gekoppelt sind.

## Claims

1. Cover device for a folding top compartment of a vehicle with a lowerable roof structure (10), in particular for a hardtop vehicle, it being possible to pivot the roof structure (10) into the folding top compartment arranged behind a rear region (4) in a back part of the vehicle bodywork, it being possible to close the folding top compartment with a folding top compartment lid (1) which can be folded up towards the rear and a free space, which can be closed with a cover unit (5) which has a front cover part (6) which in the closed position of the cover unit (5) adjoins the rear edge region (3) of the rear region (4) and a front rear region (13) of the rear cover part (7) and a rear cover part (7) which in the closed position of the cover unit (5) when the roof structure (10) is lowered into the folding top compartment adjoins a rear edge region (12) of the front cover part (6) and the front edge region (2) of the folding top compartment lid (1) and also two lateral cover parts which in the closed position of the cover unit (5) when the roof structure (10) is lowered into the folding top compartment adjoin lateral edge regions (15, 16) of the front cover part (6) and rear cover part (7), the rear edge region (3) of the rear region (4) and the front edge region (2) of the folding top compartment lid (1), remaining between the front edge region (2) of the closed folding top compartment lid (1) and a rear edge region (3) of the rear region (4), **characterized**
- **in that** the front cover part (6) is pivotably mounted on the vehicle bodywork,
- **in that** the rear cover part (7) is pivotably mounted on the front cover part (6),
- **in that** the lateral cover parts (8) are each pivotably mounted on the folding top compartment lid (1).

2. Cover device according to Claim 1, **characterized in that**, when the roof structure (10) is closed, the rear cover part (7) is folded onto the underside of the front cover part (6).

3. Cover device according to Claim 2, **characterized in that** the rear cover part (7) is shaped in such a way that in the closed position of the cover unit (5) it fills a gap (17) which is formed when the roof structure (10) is lowered between the rear edge region (12) of the front cover part (6) and the front edge region (2) of the folding top compartment lid (1).

4. Cover device according to one of Claims 1 to 3, **characterized in that**, when the roof structure (10) is pivoted, the front cover part (6) assumes a position in which it promotes pivoting, in which position it is folded up towards the front and the rear cover part (7) is folded onto the underside of the front cover part (6).

5. Cover device according to one of Claims 1 to 4, **characterized in that** the folding top compartment is formed as a boot underneath a space provided for accommodating the roof structure (10), the folding top compartment lid (1) being capable of being folded up towards the front in order to open the boot and, when the boot is opened, the front cover part (6) assuming a position in which it promotes loading, in which position it is folded up towards the front and the rear cover part (7) is folded onto the underside of the front cover part (6).

6. Cover device according to one of Claims 1 to 5, **characterized in that**, when the roof structure (10) is closed, the lateral cover parts (8) are folded onto the underside of the folding top compartment lid (1).

7. Cover device according to one of Claims 1 to 6, **characterized in that** drive means are provided for the pivoting adjustment of the front cover part (6), which drive means are mechanically positively coupled to a positive control device, supported on the bodywork, in order to pivot the roof structure (10).

8. Cover device according to one of Claims 1 to 7, **characterized in that** drive means are provided for the pivoting adjustment of the rear cover part (7), which drive means are mechanically positively coupled to a positive control device, supported on the bodywork, for pivoting the roof structure (10).

9. Cover device according to one of Claims 1 to 8, **characterized in that** drive means are provided for the synchronous pivoting adjustment of the lateral cover parts (8) which are electrically or electronically coupled to a positive control device, supported on the bodywork, for pivoting the roof structure (10)

## Revendications

1. Dispositif de recouvrement pour un compartiment de rangement de la capote d'un véhicule équipé d'une structure de toit (10) escamotable, en particulier pour un véhicule cabriolet à toit rigide, où la structure (10) du toit peut être rentrée dans le compartiment de rangement de la capote disposé derrière un secteur arrière (4), dans une zone placée à l'arrière de la carrosserie du véhicule, où le compartiment de rangement de la capote peut être fermé avec un couvercle (1) du compartiment de rangement de la capote pouvant être relevé vers l'arrière, où, entre la zone de bordure avant (2) du couvercle fermé (1) du compartiment de rangement de la capote et une zone de bordure arrière (3) du secteur arrière (4), il subsiste un espace libre qui peut être fermé par un ensemble couvrant (5) qui présente une partie couvrante avant (6) qui, dans la position de fermeture de l'ensemble couvrant (5), est contiguë à la zone de bordure arrière (3) du secteur arrière (4) ainsi qu'à une zone de bordure avant (13) de la partie couvrante arrière (7), une partie couvrante arrière (7) qui, en position de fermeture de l'ensemble couvrant (5), lorsque la structure (10) du toit est escamotée dans le compartiment de rangement de la capote, est contiguë à une zone de bordure arrière (12) de la partie couvrante avant (6) ainsi qu'à une zone de bordure avant (2) du couvercle (1) du compartiment de rangement de la capote, ainsi que deux parties couvrantes latérales (8) qui, dans la position de fermeture de l'ensemble couvrant (5), lorsque la structure (10) du toit est escamotée dans le compartiment de rangement de la capote, sont contiguës à des zones de bordures latérales (15, 16) de la partie couvrante avant (6) et de la partie couvrante arrière (7), contiguës à la zone de bordure arrière (3) du secteur arrière (4) ainsi qu'à la zone de bordure avant (2) du couvercle (1) du compartiment de rangement de la capote,
**caractérisé**
- **en ce que** la partie couvrante avant (6) est logée en pouvant pivoter sur la carrosserie du véhicule,
- **en ce que** la partie couvrante arrière (7) est logée en pouvant pivoter sur la partie couvrante avant (6),
- **en ce que** les parties couvrantes latérales (8) sont logées en pouvant pivoter respectivement sur le couvercle (1) du compartiment de rangement de la capote.

2. Dispositif de recouvrement selon la revendication 1, **caractérisé en ce que** la partie couvrante arrière (7), lorsque la structure (10) du toit est fermée, est rabattue sur le dessous de la partie couvrante avant (6).

3. Dispositif de recouvrement selon la revendication 2, **caractérisé en ce que** la partie couvrante arrière (7) est formée de manière telle que, dans la position de fermeture de l'ensemble couvrant (5), elle comble un intervalle (17) qui, lorsque la structure (10) du toit est escamotée, se forme entre la zone de bordure arrière (12) de la partie couvrante avant (6) et la zone de bordure avant (2) du couvercle (1) du compartiment de rangement de la capote.

4. Dispositif de recouvrement selon l'une quelconque des revendications 1 à 3, **caractérisé en ce que** la partie couvrante avant (6), lorsque la structure (10) du toit est escamotée, prend une position relevée vers l'avant facilitant le pivotement, position dans laquelle la partie couvrante arrière (7) est rabattue sur le dessous de la partie couvrante avant (6).

5. Dispositif de recouvrement selon l'une quelconque des revendications 1 à 4, **caractérisé en ce que** le compartiment de rangement de la capote, placé au-dessous d'un espace prévu pour le logement de la structure (10) du toit, est configuré comme un coffre à bagages, où le couvercle (1) du compartiment de rangement de la capote peut être relevé vers l'avant pour l'ouverture du coffre à bagages, où la partie couvrante avant (6), lorsque le coffre à bagages est ouvert, prend une position relevée vers l'avant facilitant le chargement, position dans laquelle la partie couvrante arrière (7) est rabattue sur le dessous de la partie couvrante avant (6).

6. Dispositif de recouvrement selon l'une quelconque des revendications 1 à 5, **caractérisé en ce que** les parties couvrantes latérales (8), lorsque la structure (10) du toit est fermée, sont rabattues sur le dessous du couvercle (1) du compartiment de rangement de la capote.

7. Dispositif de recouvrement selon l'une quelconque des revendications 1 à 6, **caractérisé en ce qu'**il est prévu, pour le mouvement pivotant de la partie couvrante avant (6), des moyens d'entraînement qui sont couplés mécaniquement, de manière forcée, à un dispositif de commande forcée, supporté côté carrosserie et servant au basculement de la structure (10) du toit.

8. Dispositif de recouvrement selon l'une quelconque des revendications 1 à 7, **caractérisé en ce qu'**il est prévu, pour le mouvement pivotant de la partie couvrante arrière (7), des moyens d'entraînement qui sont couplés mécaniquement, de manière forcée, à un dispositif de commande forcée, supporté côté carrosserie et servant au basculement de la structure (10) du toit.

9. Dispositif de recouvrement selon l'une quelconque des revendications 1 à 8, **caractérisé en ce qu'**il est prévu, pour le mouvement pivotant synchronisé des parties couvrantes latérales (8), des moyens d'entraînement qui sont couplés électriquement ou électroniquement à un dispositif de commande forcée, supporté côté carrosserie et servant au basculement de la structure (10) du toit.
